(19) **Europäisches Patentamt / European Patent Office / Office européen des brevets**

(11) **EP 2 446 947 A1**

(12) # EUROPEAN PATENT APPLICATION
published in accordance with Art. 153(4) EPC

(43) Date of publication:
**02.05.2012 Bulletin 2012/18**

(51) Int Cl.:
**A63F 13/10** *(2006.01)*

(21) Application number: **09846569.3**

(22) Date of filing: **20.08.2009**

(86) International application number:
**PCT/KR2009/004637**

(87) International publication number:
**WO 2010/150938 (29.12.2010 Gazette 2010/52)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.06.2009 KR 20090057858**

(71) Applicant: **Andamiro Co., Ltd.**
**Kyonggi 410-380 (KR)**

(72) Inventors:
• **JUNG, Woo Jin**
  **Seoul 136-726 (KR)**
• **KIM, Seong Eun**
  **Seoul 152-797 (KR)**

(74) Representative: **Palmer, Jonathan R.**
**Boult Wade Tennant**
**Verulam Gardens**
**70 Gray's Inn Road**
**London WC1X 8BT (GB)**

(54) **DEVICE AND METHOD FOR BETTING MID-RACE AND RECORDING MEDIA WHERE COMPUTER PROGRAM SOURCE FOR EXECUTING METHOD IS RECORDED**

(57) Disclosed herein are a system and a method of enabling betting during a race and a storage medium storing a program for executing the method. The method includes the steps of (a) before the start of a race, allowing bets to be made based on indicated odds; and (b) after the start of the race, varying the odds depending on racing results for one or more predetermined sections and then allowing bets to be made based on the varied odds.

[FIG9]

EP 2 446 947 A1

**Description**

BACKGROUND OF THE INVENTION

1. Field of the Invention

The present invention relates generally to racing games, and, more particularly, to a system and method for enabling betting during a race, such as a horse race, a dog race or a boat race, and a storage medium storing a program for executing the method.

2. Description of the Related Art

Horse racing is a leisure sport in which spectators place bets on and enjoy a race in which two or more horses run under predetermined conditions, such as a racing distance, a racing direction, prize money, jockey and impost, and compete to win.

That is, horse racing is a game in which people enjoy viewing a sport, and predict the results of a race, place bets on the race and receive predetermined payouts based on the actual results of the race.

Video game based horse racing is similar to actual horse racing from the point of view of the racing method.

In general, 6 ~ 12 horses participate in a race. Each gamer selects a specific horse from among the participating horses and then places a bet on the selected horse. If the race is terminated and the horse on which the gamer placed a bet wins, the payout promised at the time of betting can be received; and if the horse does not win, the payout cannot be received.

Methods of placing bets on race horses include win betting (to pick the first finisher), quinella betting (to pick the first two finishers in a race regardless of the order of finishing), show betting and exacta betting. In video game races, win betting and quinella betting are chiefly made.

Each gamer plays a game while viewing a Television (TV) client (a large-sized screen) for displaying the status of a race and a racing client for managing the betting status of the gamer at the same time.

These TV and racing clients are widely used because multiple racing clients connected to the same racing server make predictions and bet on the same race, so that trustworthiness on the results of the race can be increased by reducing suspicion of fabrication, and so that more splendid graphic representation can be made.

A race is performed in such a way that running horses are generally introduced on a screen, the horses participating in a race are aligned at the start line, and gamers view a betting screen and place bets until the race starts.

This method of calculating odds based on predicted winning percentages before the start of a race is disclosed in Korean Unexamined Patent Publication No. 2002-88709. Korean Unexamined Patent Publication No. 2002-88709 discloses a race winning percentage prediction method including the steps of collecting source data, downloading a current race schedule from a database (DB) and providing the schedule to each user, allowing a specific race to be selected from the displayed current race schedule, allowing a specific jockey and a specific horse to be selected within the selected specific race, displaying information about the selected jockey and horse, combining the source data with current race data, assigning weights to pieces of combined data, and calculating expected profits (odds and predicted winning percentages) based on respective pieces of combined data assigned the weights.

That is, the invention disclosed in Korean Unexamined Patent Publication No. 2002-88709 relates to a method of constructing combined data by combining previous race scores with current race data, assigning weights subjectively selected by a user to the combined data and predicting race winning percentages, thereby determining the odds.

However, in most of these prediction methods, before the start of a race, analysis is completed, odds are determined based on the analysis, and betting is completed.

However, although gamers want to place bets after the start of a race while the race is being watched, as well as before the start of a race, there is a problem in that it is impossible to place bets after the start of a race.

Furthermore, although the profits of bookmakers can be increased if a larger number of bets are placed, there is a problem in that the profits thereof cannot be increased because betting should be completed before the start of a race.

SUMMARY OF THE INVENTION

Accordingly, the present invention has been made keeping in mind the above problems occurring in the prior art, and an object of the present invention is to provide a system and method for enabling betting during a race which allow bets to be placed after the start of a race while the race is viewed, and a storage medium storing computer program sources for executing the method.

Another object of the present invention is to provide a system and method for enabling betting during a race which can indicate odds and conversion ratios based on the capabilities of respective entities before the start of a race and which allow bets to be placed based on racing results for one or more sections or periods after the start of the race.

Still another object of the present invention is to provide a system and method for enabling betting during a race which can vary and indicate the conversion ratios while maintaining the odds after the start of a race, thereby enabling a gamer to easily comprehend the odds.

Still another object of the present invention is to provide a system and method for enabling betting during a race which can expand and display a race course for a predetermined distance or period before and after the start of a race.

Still another object of the present invention is to provide a system and method for enabling betting during a race which can provide a jackpot game to a gamer who bets a predetermined or larger amount of money as a bonus game at the same time that additional betting is terminated.

In order to accomplish the above object, the present invention provides a method of enabling betting during a race, including the steps of (a) before start of a race, allowing bets to be made based on indicated odds; and (b) after start of the race, varying the odds depending on racing results for one or more predetermined sections and then allowing bets to be made based on the varied odds, or a method of enabling betting during a race, including the steps of (a) before start of a race, allowing bets to be made based on set odds; and (b) after start of the race, varying a conversion ratio depending on racing results for one or more predetermined sections while keeping the set odds of step (a) constant and then allowing bets to be made based on the varied conversion ratio.

Preferably, before start of the race, the conversion ratio is set to "1".

Preferably, the conversion ratio is calculated using the following equation:

$$\text{Conversion ratio during race } B_{in} = \text{odds before start of race } Y_i / \text{odds during race } Y_{in}$$

where $B_{in}$ is a conversation ratio for an i-th entity and an n-th section, $Y_i$ is odds before start of the race for the i-th entity, and $Y_{in}$ is odds for the i-th entity and the n-th section.

According to another aspect of the present invention, there is provided a method of enabling betting during a race, including the steps of (a) before start of a race, allowing bets to be made based on set odds; and (b) after start of the race, varying the odds depending on winning possibility for a remaining distance and then allowing bets to be made based on the varied odds, or a method of enabling betting during a race, including the steps of (a) before start of a race, allowing bets to be made based on set odds; and (b) after start of the race, varying a conversion ratio depending on winning possibility for a remaining distance while keeping the set odds of step (a) constant and then allowing bets to be made based on the varied conversion ratio.

Preferably, before the start of the race, the conversion ratio is set to "1."

Preferably, the step (b) includes the steps of (b-1) calculating a running record $R_i$ for each entity and each section; (b-2) calculating an average section record $R_{mn}$ for each entity and each section; (b-3) calculating predicted records for each entity and a remaining distance and a sum of the predicted records using the average section record $R_{mn}$ and the running record for each section $R_i$ and calculating a section evaluation factor $R'_{in}$ using them; (b-4) calculating a remaining section relative winning percentage for each entity $X'_{in}$ using the section evaluation factor for each entity $R'_{in}$; and (b-5) calculating a remaining section odds for each entity $Y'_{in}$ using the remaining section relative winning percentage $X'_{in}$.

Preferably, the step (b) includes the steps of (b-1) calculating a running record $R_i$ for each entity and each section; (b-2) calculating an average section record $R_{mn}$ for each entity and each section; (b-3) calculating predicted records for each entity and a remaining distance and a sum of the predicted records using the average section record $R_{mn}$ and the running record for each section $R_i$ and calculating a section evaluation factor $R'_{in}$ using them; (b-4) calculating a remaining section relative winning percentage for each entity $X'_{in}$ using the section evaluation factor for each entity $R'_{in}$; (b-5) calculating a remaining section odds for each entity $Y'_{in}$ using the remaining section relative winning percentage $X'_{in}$; and (b-6) calculating a remaining section conversion ratio using the odds $Y'_{in}$.

Preferably, the remaining section conversion ratio is calculated using the following equation:

$$\text{Remaining section conversion ratio during race } B'_{in} = \text{odds before start of race } Y_i / \text{remaining section odds during race } Y'_{in}$$

where $B'_{in}$ is a remaining section conversation ratio for an i-th entity and an n-th section, $Y_i$ is odds before start of the race for the i-th entity, and $Y'_{in}$ is remaining section odds for the i-th entity and the n-th section.

According to still another aspect of the present invention, there is provided a system for enabling betting during a race, including a first winning percentage calculation unit for, before start of a race, calculating a relative winning percentage $X_i$ and odds $Y_i$ for each entity using an evaluation score for each entity participating in the race and a sum of evaluation scores for respective entities and outputting them; a second winning percentage calculation unit for calculating a section evaluation factor for each section $R_{in}$ using a running record for each entity and each section $R_i$ and an average section record for each section $R_{mn}$, and calculating and outputting a section relative winning percentage for each entity $X_{in}$ and odds for each entity $Y_{in}$; a display device comprising information about respective entities, a betting screen before start of the race, a betting screen for each section after start of the race, and a racecourse display part for status of the race; and a control unit for performing control so that before start of the race, the odds output from the first winning percentage calculation unit are displayed on the display device and, after start of the race, the odds output from the second winning percentage calculation unit are displayed on the betting screen for each section of the display device.

Preferably, the control unit performs control so that a conversion ratio is indicated as "1" on the betting screen before start of the race and the odds are indicated and the conversion ratio is varied and then indicated on the betting screen for each section after start of the race.

Preferably, the conversion ratio is calculated using the following equation:

$$\text{Conversion ratio during race } B_{in} = \text{odds before start of race } Y_i/\text{odds during race } Y_{in}$$

where $B_{in}$ is a conversation ratio for an i-th entity and an n-th section, $Y_i$ is odds before start of the race for the i-th entity, and $Y_{in}$ is odds for the i-th entity and the n-th section.

Preferably, the racecourse display part of the display device is configured to display, before start of the race, an entire distance of the race and status of preparation of respective entities at a start line, after start of the race and before termination of additional betting, an enlarged section for each predetermined distance and detailed status of the race, and, after termination of additional betting, an entire run distance.

Preferably, the display device comprises a racecourse display part provided in an upper portion of the display unit, configured in a lateral bar form, and configured to display the status of the race, a win betting display part and a quinella betting display part provided on one side of a portion below the upper portion, provided for respective entities participating in the race, and displayed in a vertical direction, and a jackpot display part provided on a remaining side of the portion below the upper portion.

Preferably, the jackpot display part is configured such that when a bet of a predetermined or larger amount is placed, additional betting is terminated, a bonus game is indicated, and then a payout corresponding to corresponding odds is paid when the betting was successful.

According to still another aspect of the present invention, there is provided a system for enabling betting during a race, including a first winning percentage calculation unit for, before start of a race, calculating a relative winning percentage $X_i$ and odds $Y_i$ for each entity using an evaluation score for each entity participating in the race and a sum of evaluation scores for respective entities and outputting them; a second winning percentage calculation unit for calculating a remaining section evaluation factor for each section $R_{in}$ using a running record for each entity and each section $R_i$ and an average section record for each section $R_{mn}$, and calculating and outputting a remaining section relative winning percentage for each entity $X_{in}$ and remaining section odds for each entity $Y_{in}$; a display device comprising information about respective entities, a betting screen before start of the race, a betting screen for each section after start of the race, and a racecourse display part for status of the race; and a control unit for performing control so that before start of the race, the odds output from the first winning percentage calculation unit are displayed on the display device and, after start of the race, the remaining section odds output from the second winning percentage calculation unit are displayed on the betting screen for each remaining section of the display device.

Preferably, the control unit performs control so that a conversion ratio is indicated as "1" on the betting screen before start of the race and the odds are indicated and the conversion ratio is varied and then indicated on the betting screen for each section after start of the race.

According to still another aspect of the present invention, there is provided a storage medium storing computer program sources for executing a method of enabling betting during a race, wherein the method including the steps of (a) before start of a race, allowing bets to be made based on set odds; and (b) after start of the race, varying a conversion ratio depending on winning possibility for a remaining distance while keeping the set odds of step (a) constant and then allowing bets to be made based on the varied conversion ratio.

Preferably, the step (b) comprises the steps of (b-1) calculating a running record $R_i$ for each entity and each section; (b-2) calculating an average section record $R_{mn}$ for each entity and each section; (b-3) calculating predicted records for each entity and a remaining distance and a sum of the predicted records using the average section record $R_{nm}$ and the running record for each section $R_i$ and calculating a section evaluation factor $R'_{in}$ using them; (b-4) calculating a remaining section relative winning percentage for each entity $X'_{in}$ using the section evaluation factor for each entity $R'_{in}$: (b-5) calculating a remaining section odds for each entity $Y'_{in}$ using the remaining section relative winning percentage $X'_{in}$; and (b-6) calculating a remaining section conversion ratio using the odds $Y'_{in}$.

BRIEF DESCRIPTION OF THE DRAWINGS

The above and other objects, features and advantages of the present invention will be more clearly understood from the following detailed description taken in conjunction with the accompanying drawings, in which:

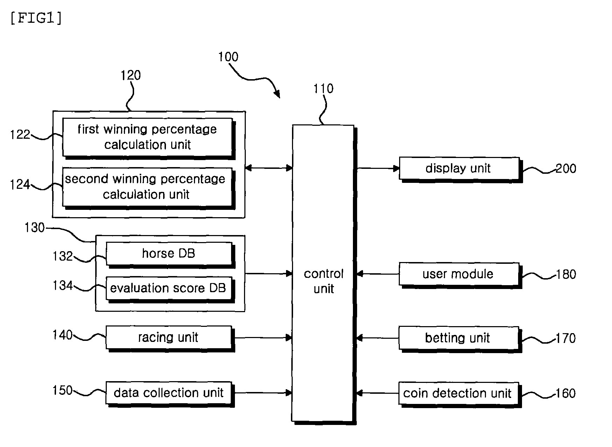

FIG. 1 is a block diagram showing the construction of the present invention;
FIG. 2 is a diagram showing the display of horse information on a directed screen before the start of a race;
FIG. 3 is a diagram showing a directed screen before the start of a race according to an embodiment of the present invention;
FIG. 4 is a diagram showing a directed screen immediately before the start of a race according to an embodiment of the present invention;

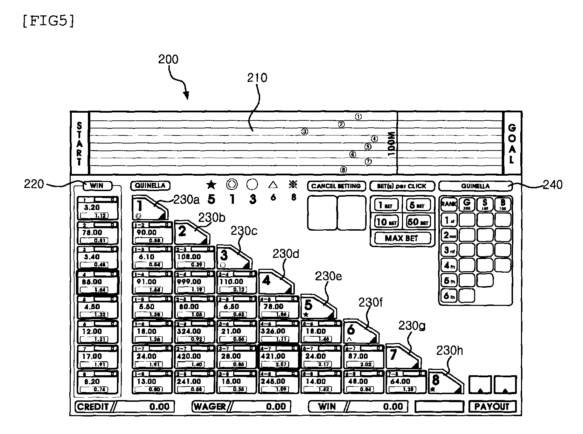

FIG. 5 is a diagram showing a directed screen after the start of a race according to an embodiment of the present invention;
FIG. 6 is an enlarged view showing the betting screen of the directed screen;
FIG. 7 is an enlarged view showing the racing status screen of the directed screen;
FIG. 8 is an enlarged view showing the jackpot screen of the directed screen; and
FIG. 9 is a flowchart illustrating a method of enabling betting after the start of a race according to the present invention.

DESCRIPTION OF THE PREFERRED EMBODIMENTS

The terms and words used in the present specification and the accompanying claims should not be limitedly interpreted as having common meanings or meanings appearing in dictionaries, but should be interpreted as having meanings suitable for the technical spirit of the present invention on the basis of the principle that an inventor can appropriately define the concepts of terms in order to describe his or her invention in the most appropriate way.
In particular, the terms used in the present invention are defined as described below.
The term "conversion ratio" refers to the lowest betting unit which enables the receipt of a payout corresponding to predetermined odds, and is expressed in credits. Before the start of a race, a conversion ratio generally refers to the odds for one credit. Since the present invention is configured to enable betting to be made after the start of a race, the concept of the term "conversion ratio" is introduced to calculate the odds while the race is ongoing. That is, when the probability of winning is reduced during a race, odds are generally increased, so that high odds are generally provided. However, in another method, the same effect can be achieved by relatively reducing the lowest betting unit while keeping the odds constant, in which case the conversion ratio refers to the variation of the effective credit on the basis of the winning probability. In particular, in the case where before the start of a race, odds for one credit are 40 (before the start of a race, the odds are based on the value of one credit), when the probability of winning is reduced during the race, a payout corresponding to the same odds can be received using a relative lower bet by changing the lowest betting unit to 0.8 credits (a conversion ratio) rather than by increasing the odds. In contrast, when the probability of winning is increased, the same effect of reducing the odds can be achieved using a relatively higher bet by changing the lowest betting unit to 1.2 credits (a conversion ratio) rather than reducing the odds.
The term "sections" are set by dividing about the first 50% of the complete distance of a corresponding race into sections of, for example, 50 m or 100 m and referring to them as a first section, a second section, etc.
The term "periods" are set by dividing about the first 50% of the complete period of a corresponding race into periods ranging five to ten minutes and referring to them as a first section, a second section, etc.
The term "entity" refers to a subject participating in a race, for example, a car in a car race or a horse in a horse race.
Meanwhile, although the present invention will be described using a horse race as an example in order to illustrate a race during which interim bets can be placed after the start of the race, it will be apparent that the present invention is not limited thereto.
A system for enabling betting during a game according to an embodiment of the present invention will be described in detail below with reference to the accompanying drawings.
The system 100 for enabling betting during a game according to the present invention includes a winning percentage calculation unit 120 for calculating odds and conversion ratios, a capability DB 130 for holding data about horses and a variety of types of data required to calculate winning percentages, a racing unit 140 for holding data about racing results for respective sections during a race, a data collection unit 150 for collecting data during a race, a coin detection unit 160 for detecting the insertion of a bill or a coin, a betting part 170 for managing betting, a user module 180, a display device 200, and a control unit 110.

The data collection unit 150 is a device for collecting data required to calculate odds during a race, and collects and outputs the running records $R_i$ of respective horses for respective sections or periods after the start of a race.

Here, "i" refers to an i-th horse, and "n" refers to an n-th section.

The racing unit 140 calculates the average section records $R_{mn}$ of corresponding horses while referring to the records $R_i$ of respective horses for respective sections or respective periods collected by the data collection unit 150, and outputs the average section records $R_{nm}$ and the running records $R_i$ of respective horses for corresponding sections to the winning percentage calculation unit 120.

The variable "m" refers to average, and the variable "n" refers to an n-th section.

The average section record $R_{mn}$ of each horse is data required to calculate the odds for each section or period after the start of a race for the given horse. After a first section has been completed, there is a running record for only a first section $R_{il}$, so that the calculation of the average record is meaningless. Accordingly, the average record of the corresponding horse in a past race is used as an average section record for a first section $R_{m1}$.

After a second section has been completed, the average record up to the second section $R_{m2}$ is calculated by taking the average of "a running record for the first section $R_{i1}$" and "a running record for the second section $R_{i2}$." After a third section has been completed, an average record up to the third section $R_{m3}$ is calculated by taking the average of "a running record for the first section $R_{i1}$," "a running record for the second section $R_{i2}$" and "a running record for the third section $R_{i3}$."

The capability DB 130 includes a horse DB 132 for storing information about horses and an evaluation information DB 134 for calculating relative winning percentages and odds before the start of a race.

The horse DB 132 is configured to hold information about respective horses and racing records for past races of the respective horses.

For example, the horse DB 132 may be configured to hold data about the name, age, gender, style, racing results of the most recent five races, weight, highest record, average record, and section-based running records of past races of each horse and output corresponding data in response to requests from the output control unit 110, or may be configured to include a variety of factors required to calculate the capabilities of respective horses.

In order to calculate relative winning percentages and odds before the start of a race, the evaluation information DB 134 is configured to receive data from the horse DB 132 and output data.

In order to calculate relative winning percentages before the start of a race, the winning percentage calculation unit 120 is configured to receive the capability data of respective horses from the horse DB 132, calculate the evaluation scores of the respective horses and the total score of the evaluation scores of the respective horses and output them.

For example, the winning percentage and odds for a participating horse are generally calculated on the basis of the intrinsic capability which can be expressed in terms of a numerical value. The intrinsic capability is calculated on the basis of factors, including age, impost, condition, the highest record, an average record and jockey compatibility.

An impost is the weight that must be carried by a horse in a race. Imposts may be classified into a horse age impost depending on the age of a horse, a handicap impost imposed by a handicapper, and a specially determined impost calculated according to the age, gender, prize money, number of wins of a horse and other conditions determined in a horse race plan table.

Jockey compatibility refers to the level of compatibility between a horse and a jockey in characteristic and fitness.

Additionally, power, speed, stamina, start, disposition, etc. may be incorporated into capabilities.

On the basis of such capabilities, statistical capabilities are calculated and scored for factors influencing the winning percentages of the entities of a race, that is, horses, jockeys and horse trainers, weights are assigned with a variety of characteristics taken into account, and environmental factors, such as temperature/humidity, weather, the conditions of the entities of a race and assigned gates, which are conditions variable depending on that day, are taken into account, thereby obtaining the evaluation score of each horse and the sum of the evaluations scores of respective horses.

The sum of evaluation scores may refer to the sum of evaluation scores freely assigned by a user to respective selected prediction factors.

The winning percentage calculation unit 120 includes a first winning percentage calculation unit 122 for calculating odds before the start of a race and a second winning percentage calculation unit 124 for calculating odds for respective sections or periods after the start of the race.

The first winning percentage calculation unit 122 is configured to receive information required for the calculation of odds before the start of a race from the evaluation information DB 134 of the capability DB 130, predict relative winning percentages, calculate the odds based on the prediction, and output the calculated odds.

The calculation of odds before the start of a race is performed through relative evaluation based on objective data. Since the present invention relates to a technology for enabling interim betting after the start of a race, the present invention does not limit the calculation of odds before the start of a race.

For example, when the evaluation score of an i-th horse and the sum of the evaluation scores of respective horses are respectively given as "$H_i$" and "$\Sigma H_{total}$" and retrieved from the evaluation information DB 134, the relative winning percentage $X_i$ of the i-th horse may be calculated by the following Equation (1):

$$X_i = (H_i / \sum H_{total}) * 100 \tag{1}$$

where $X_i$ is the relative winning percentage of the i-th horse, $H_i$ is the evaluation score of the i-th horse, and $\Sigma H_{total}$ is the sum of the evaluation scores of all horses which participate in a race.

By using the relative winning percentage $X_i$ obtained from Equation (1), the odds $Y_i$ of the i-th horse may be calculated using the following Equation (2):

$$Y_i = 1 / (X_i / A) \tag{2}$$

where $Y_i$ is the odds of the i-th horse, $X_i$ is the relative winning percentage of the i-th horse, and "A" is an odds constant set by a user to calculate odds. The odds constant may be adjusted according to the results of the operation of a race, and is normally set to a value greater than 1 and less than 100. That is, the odds constant is adjusted in such a way that the odds constant is decreased when odds are excessively high and the odds constant is increased when odds are excessively low. In the present specification, the odds constant is set to "60" and then the following description will be given below.

When odds for respective horses are calculated, corresponding odds data, together with horse numbers, is sent to the control unit 110, and the control unit 110 controls the display device 200 so that the display device 200 displays the odds for respective horses before the start of a race.

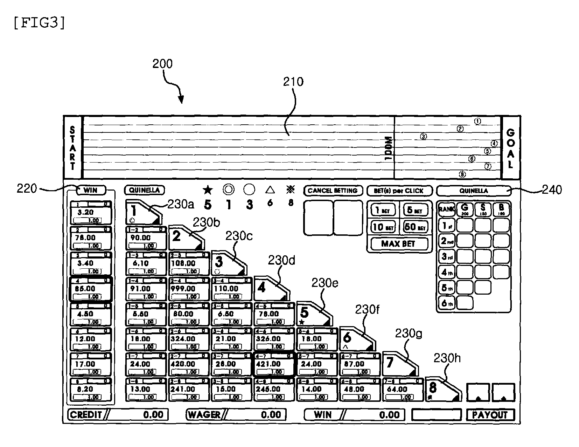

In particular, referring to a directed screen before the start of a race shown in FIG. 3, it can be seen that the odds calculated as described above are displayed on the odds display part 124.

In order to enable betting to be repeatedly made after the start of a race up to a specific section or period, the second winning percentage calculation unit 124 is configured to calculate and then output odds based on racing results for respective sections or periods.

Although the sections and periods are not specially limited as described above, about the first 50% of the complete distance or period of a race is divided into sections of 50 m or 100 m and then odds are calculated for the sections in order to increase interest. When periods are used, about the first 50% of the expected period of a race is divided into periods ranging from five minutes to ten minutes and then odds are calculated for the periods. Accordingly, bets can be placed for respective sections or periods during the race.

For this purpose, when odds are calculated during a race, it is possible to calculate a relative winning percentage while taking into consideration results for respective sections or periods after the start of the race.

For example, the racing unit 140 receives average section records $R_{mn}$ and running records $R_i$ for respective sections, and calculates the section evaluation factor $R_{in}$ of an i-th horse using the following Equation 3:

$$R_{in} = Ad * (R_{mn} - R_{n-1})$$

where $R_{in}$ is an evaluation factor for the n-th section or period of the i-th horse, Ad is weights for respective sections or periods, $R_{mn}$ is average running records for respective sections after the start of a race, and $R_{n-1}$ is a running record for an (n-1)-th section.

The weight Ad is set to a low value immediately before the start of a race, and to a high value after the start of the race, in conjunction with the total distance or period of a race. The relative winning percentage and odds before the start of a race are applied to a first section for the start of the race.

For ease of description, in the present specification, the following description will be given in the situation in which the weight Ad is set to a number less than the number of each section by one in such a way that the weight Ad is set to "0" for a first section, to "1" for a second section and to "2" for a third section, and there are 10 sections.

$R_{mn}$ is the average of running records for respective sections or periods after the start of a race. Since there are no records for a first section, past average records for respective sections are used.

Accordingly, the section evaluation factor $R_{in}$ of the i-th horse is inversely proportional to scores for respective sections.

When the record of the first section is evaluated after the start of the race, the relative winning percentage $X_{in}$ of the i-th horse for the n-th section during the race is obtained by multiplying the relative winning percentage $X_i$ of the i-th horse before the start of the race by the reciprocal of the section evaluation factor $R_{in}$ of the i-th horse obtained using Equation (3), as shown in the following Equation (4):

$$X_{in} = X_i / R_{in} \tag{4}$$

When Equation (1) is substituted into Equation (4),
$X_{in} = \{ (H_i / \Sigma H_{total}) * 100 \} / R_{in}$ is obtained.

Referring to Equation (4), as the running records for respective sections are superior, relative winning percentages $X_{in}$ for the corresponding sections are higher.

Accordingly, when the relative winning percentages for respective sections are determined, odds $Y_{in}$ for the i-th horse and for the n-th section may be calculated using the following Equation (5):

$$Y_{in} = 1 / (X_{in} / A) \tag{5}$$

That is, referring to Equation (5), in order to determine odds for the i-th section, average records for respective sections up to an (i-1)-th section and a running record for the (i-1)-th section which is a section immediately before the i-th section are required.

That is, results for sections in which the race has been performed are evaluated, odds for forward sections are displayed, and then betting is made.

Accordingly, odds for a first section after the start of a race are the same as odds before the start of the race.

Meanwhile, when odds for a second section are calculated, a running record for the first section is created but it is impossible to calculate an average record for the first section, so that a past average record is used as the average record for the corresponding section so as to provide suspense to the race.

Meanwhile, when a second section of the race is completed, running records for the first and second sections are calculated, so that a section average record $R_m$ is calculated using the running records for the first and second sections without considering a past average record.

Accordingly, constants used to calculate relative winning percentages and odds before the start of a race, as shown in Table 1, and relative winning percentages and odds before and after the start of the race and data about the evaluation factors of a horse are determined based on the above constants, as shown in Table 2.

Table 1

|  | Before start of race | First section | Second section | ⋯ | Last section (10) |
|---|---|---|---|---|---|
| Odds constant (A) | 60 | 60 | 60 | 60 | 60 |
| Weight (Ad) | - | - | 1 | 2 ⋯ | 9 |

Table 2

|  | Before start of race | First section | Second section | ⋯ | Last section (10) |
|---|---|---|---|---|---|
| Conversion ratio ($B_n$) | 1 | 1 | $B_2 = (1 * Y_i) / Y_2$ | ⋯ | $B_{10} = (1 * Y_i) / Y_{10}$ |
| Section evaluation factor ($R_{in}$) | - | - | $R_2 = \{1 * (R_m - R_1)\}$ | ⋯ | $R_{10} = (9 * (R_m - R_9))\}$ |
| Section relative winning percentage ($X_{in}$) | - | - | $X_2 = X_i / R_2$ ⋯ | ⋯ | $X_{10} = X_i R_{10}$ |

(continued)

|  | Before start of race | First section | Second section | ⋯ | Last section (10) |
|---|---|---|---|---|---|
| Section odds ($Y_{in}$) | - | - | $Y_2 = 1/(X_2/60)$ | ⋯ | $Y_{10} = 1/(X_{10}/60)$ |
| Relative winning percentage ($X_i$) | $X_i = (H_i/\Sigma H_{total})*100$ | the same as on the left side |  |  |  |
| Odds ($Y_i$) | $Y_i = 1/(X/60)$ | the same as on the left side |  |  |  |
| (where $B_n$ refers to a conversion ratio for an n-th section) | | | | | |

The coin detection unit 160 is configured to detect the start of a race using a well-known sensor capable of detecting the insertion of a coin or a medal through a coin slot (not shown) or a well-known bill validator capable of detecting the insertion of a bill or a substitute for a bill through a bill slot or a card reader.

The display device 200 is constructed of a well-known device capable of outputting race images and characters, such as scores, through a screen, such as a cathode-ray tube monitor, a PDP or an LCD, and is configured to display information about respective horses, betting screens before and after the start of a race, and the status of a race.

Referring to the accompanying drawings, screens displayed by the display device 200 will be described in detail below.

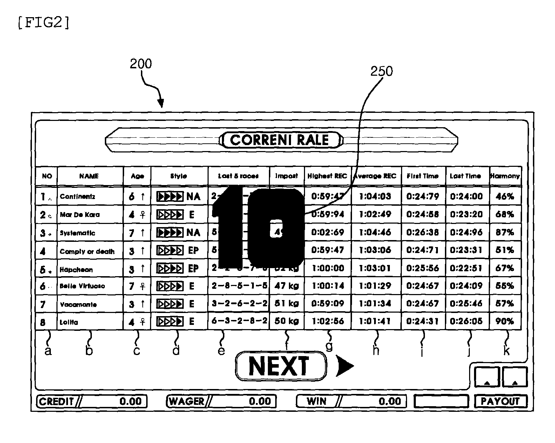

Referring to a directed screen before the start of a race configured to display horse information and shown in FIG. 2, information about corresponding racehorses is displayed in conjunction with determined tracks.

Track numbers 'a', the names of corresponding horses b, ages and genders c, styles d, most recent 5 race records e, imposts f, the highest records g, average records h, first section average records i, last section records j and harmonies k are displayed. Furthermore, a count display part 250 for providing notification of the impending start of a race by counting down from 10 seconds before the start of the race is displayed in the form of a popup window.

Furthermore, before the start of a race, a betting screen in which bets can be placed is displayed. Referring to the directed screen before the start of a race shown in FIG. 3, a racecourse display part 210 for displaying the status of a race is provided in the upper portion of the display device 200, and a win betting display part 220 and a quinella betting display part 230 for racehorses corresponding to the numbers of the racehorses are provided in a vertical direction.

The racecourse display part 210 is configured to display, before the start of a race, a complete distance of the race and the status of preparation of entities at a given line, and, after the start of the race, an enlarged racecourse for respective set sections in order to increase the suspense of additional betting. Until the additional betting is terminated, the status of the race is indicated in detail by enlarging sections of a predetermined distance. After the addition betting has been terminated, the complete racecourse is displayed.

A quinella betting display part 230 includes lines 230a to 203h. It is preferred that for the convenience of gamers, lines 230a to 203h are sequentially arranged in such a way that line "230a" indicates a quinella bet associated with horse No. 1, line "230b" indicates a quinella bet associated with horse No. 2, and so forth.

Furthermore, a jackpot display part 240 is displayed on the right side of the display unit.

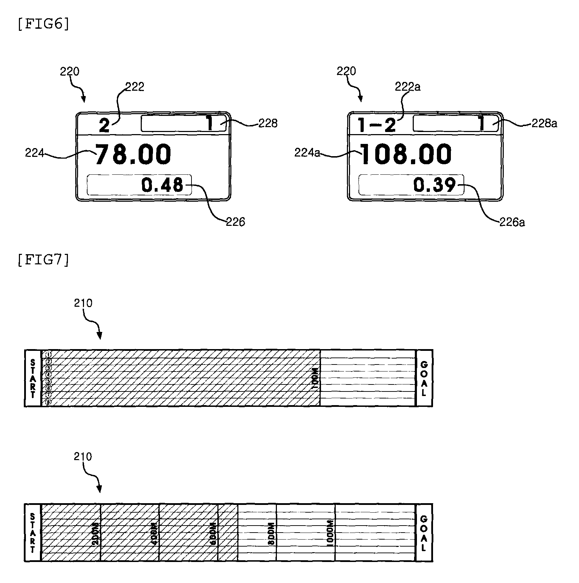

Referring to the directed screen of FIG. 6 in which the betting screen has been enlarged, the win betting display part 220 and the quinella betting display part 230 will now be described in detail. In the case of win betting, as shown in the left side of the screen of FIG. 6, a horse number display part 222, an odds display part 224, a conversion ratio display part 226 and a betting display part 228 are displayed. In the case of quinella betting, as shown on the right side of the screen, quinella betting horse numbers are displayed in a horse number display part 222a, and an odds display part 224a, a conversion ratio display part 226a and a betting display part 228a are displayed in the same way as in the case of win betting.

Before the start of a race, the conversion ratio display parts 226 are all set to "1."

This means that before the start of a race, a payout corresponding to the odds displayed on the odds display part 224 will be paid in proportion to the number of bets displayed on the betting display part 228.

Preferably, the racecourse display part 210 displays, before the start of the race, the status of preparation of respective horses at a given line, in the early stage of the race, the detailed status of the race by enlarging the part of a screen up to the 100m position to the complete screen, and, after the 100m position, a complete race distance.

That is, referring to the enlarged racing status display screen of a directed screen shown in FIG. 7, an enlarged screen from the start line to the first 100 m is displayed on an upper screen, and the complete distance of the race is displayed after the start of the race and after 100 m, as shown in a lower screen.

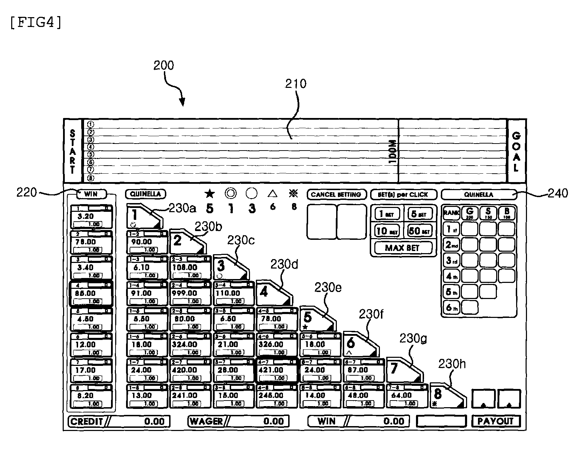

Furthermore, from a directed screen after the start of a race shown in FIG. 4, it can be seen that each of the conversion ratio of a conversion ratio display part 226 for win betting and the conversion ratio of a conversion ratio display part 226a for quinella betting is greater or less than "1." In order to enable betting after the start of a race, odds may be varied depending on results for each section or period and then indicated. However, since the variation of the odds may confuse a user, the same effect is provided by keeping the odds constant and relatively varying the conversion ratio for the convenience of the user.

That is, the variation of the odds after the start of the race is represented using the conversion ratio, so that the difference between the first odds and the current odds can be easily comprehended.

Furthermore, although in the embodiment of the present invention, the odds have been described as being constant and the relative conversion ratio has been described as being varied, it will be apparent that the conversion ratio of the conversion ratio display part 226 or 226a may be set to "1" and the odds may be varied depending on results for each section or period, in which case the conversion ratio display part 226 or 226a is turned off and is not displayed.

The control unit 110 controls the display device 200 so that a necessary directed screen is displayed on the display device 200 according to the status of the race, and, when a predetermined or larger amount of money is bet, may run a separate program for providing a bonus score to the jackpot display part 240 of the display device 200.

Furthermore, the control unit 110 may display odds, output from the winning percentage calculation unit 120 according to the status of the race, on the display device 200 without change, or may display them in the form of a conversion ratio.

That is, when odds varying with the status of a race are displayed, a conversion ratio may be set to "1" or may not be indicated. In contrast, when odds are constant and a conversion ratio is indicated, odds output from the winning percentage calculation unit 120 are converted into a conversion ratio and the conversion ratio is indicated.

In particular, when a conversion ratio is indicated as "1," a payout corresponding to the odds is paid for a bet of "1" unit. In contrast, when the conversion ratio is varied to "0.6" during a race, a bet of "1" unit is considered to be a bet of "0.6" unit. That is, when a bet of 0.6 unit is placed, a payout corresponding to the corresponding odds is paid.

Accordingly, by reducing the conversion ratio when the odds are increased and by increasing the conversion ratio when the odds are reduced, the odds are constant and the conversion ratio is varied, thereby achieving the effect of increasing or reducing the odds.

In the present invention, the odds are kept constant before the start of a race and after the start of a race and the conversion ratio is varied depending on the status of the race, so that it will be apparent that there are many such methods.

For example, when the conversion ratio is "1" (the conversion ratio always is "1" before the start of a race), the odds are "4.8." If the odds are increased to 5.4 during the race, the odds are not increased, but the conversion ratio is reduced to about "0.86," thereby achieving the effect of increasing the odds.

In this method, keeping a value obtained by multiplying odds by a conversion ratio constant is enough. That is, a conversion ratio $B_i$ during a race for an i-th horse is expressed by the following Equation (6):

$$\text{Odds before race } Y_i * \text{conversion ratio before race } 1$$

$$= \text{odds during race } Y_{in} * \text{conversion ratio during race } B_i$$

$$= \text{constant } C \tag{6}$$

Accordingly, since in the above-described example, odds $Y_i$ before a race are "4.8," a conversion ratio before the race is "1" and odds Yin during the race for a specific section are "5.4," a conversion ratio $B_i$ during the race is obtained using Equation 8, as follows:

$$4.8*1 = 5.4*B$$

Accordingly, "B" is about "0.86."

As a result, the control unit 110 performs control so that the following conversion ratios Bin are calculated based on the data of Table 2 and displayed on the display device 200.

Table 3

| | Before start of race | First section | Second section | ⋯ | Last section (10) |
|---|---|---|---|---|---|
| Conversion ratio $(B_{in})$ | 1 | 1 | $B_2=(1*Y_i)/Y_2$ | ⋯ | $B_{10}=(1*Y_i)/Y_{10}$ |
| Section evaluation factor $(R_{in})$ | - | - | $R_2=\{1*(R_m-R1)\} R_1)\}$ | ⋯ | $R_{10}=\{9*(R_m-R_9)\}$ |
| Section relative winning percentage $(X_{in})$ | - | - | $X_2=X_i/R_2$ | ⋯ | $X_{10}=X_1/R_{10}$ |
| Section odds $(Y_{in})$ | - | - | $Y_2=1/(X_2/60)$ | ⋯ | $Y_{10}=1/(X_{10}/60)$ $Y_{10}=1/(X_{10}/60)$ |
| Relative winning percentage $(X_i)$ | $X_i=(H_i/\Sigma H_{total}) *100$ | the same as on the left side | | | |
| Odds $(Y_i)$ | $Y_i=1/(X/60)$ | the same as on the left side | | | |
| (where $B_{in}$ refers to a conversion ratio for an i-th horse and an n-th section) | | | | | |

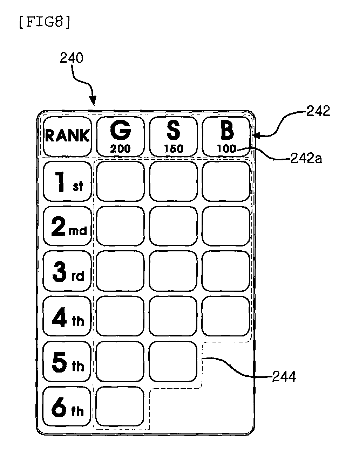

Referring to the enlarged diagram of a jackpot display part shown in FIG. 8, a jackpot will now be described.

A jackpot is configured such that when a bet greater than a predetermined amount of money is placed, additional betting is prohibited, a relevant game is displayed as a bonus game, and a payout corresponding to odds is paid when the order of horse numbers is hit.

For this purpose, the jackpot display part 240 includes a jackpot type display part 242 and a horse number display part 244 for displaying winner candidates in order of likelihood.

The jackpot type display part 242 displays the types of the jackpot which are bronze B, silver S and gold G, and has corresponding odds display parts 242a.

Each of the odds display parts 242a displays odds that will be used to pay a payout when horses have arrived in the order of displayed horse numbers at the end of a race and the order of horse numbers is hit.

For example, bronze may be set as a bonus race that is provided in the case where more than 10 bets have been placed, silver may be set as a bonus race that is provided in the case where more than 20 bets have been placed, and gold may be set as a bonus race that is provided in the case where more than 30 bets have been placed. When a corresponding bonus race is won, a bonus corresponding to odds displayed on the odds display part 242a is paid.

In particular, in the case of a bronze race, the four horse numbers of winner candidates are arranged in order. It will be apparent that winner candidates are strong winner candidates prominent in a corresponding race. In the case of a silver race, five horse numbers are displayed. In the case of a gold race, six horse numbers are displayed. Furthermore, when a bonus race corresponding to a gold race is assigned, silver and bronze races may be also participated in as an additional bonus. When a bonus race corresponding to a silver race is assigned, a bronze race may be also participated in as additional bonuses.

When horses have arrived in the order of the horse numbers displayed in conjunction with a jackpot game at the end of a race, corresponding horse numbers may be caused to blink when displayed to a gamer.

Meanwhile, it is preferred that a sequential arrangement table with a higher probability of winning be displayed to a gamer with a higher accumulated betting amount, so that the gamer who participates in a race for a longer period can receive a profitable bonus score.

A betting part 170 is configured to allow betting to be made according to a determined betting rate. The betting part 170 is configured not only to enable betting to be made based on displayed odds before the start of a race but also to enable betting to be made for respective sections or periods after the start of a race.

For this purpose, the betting part 170 displays a minimum credit for the reception of determined odds, and indicates that a payout corresponding to odds can be received in return for one bet. However, in the embodiment of the present invention, the conversion ratio is used, so that the betting unit displayed in the betting part 170 is the unit of the conversion ratio output from the control unit 110.

The user module 180 is composed of a plurality of buttons (a service call button, a coin discharge button, a betting button, a user setting button, etc.), and may include a touch screen through which a gamer can input data through touching.

A method of making betting after the start of a race according to the present invention will be described below with reference to the accompanying drawings.

In order to avoid redundant descriptions, the variables and equations used in the description of the above system will also be used below.

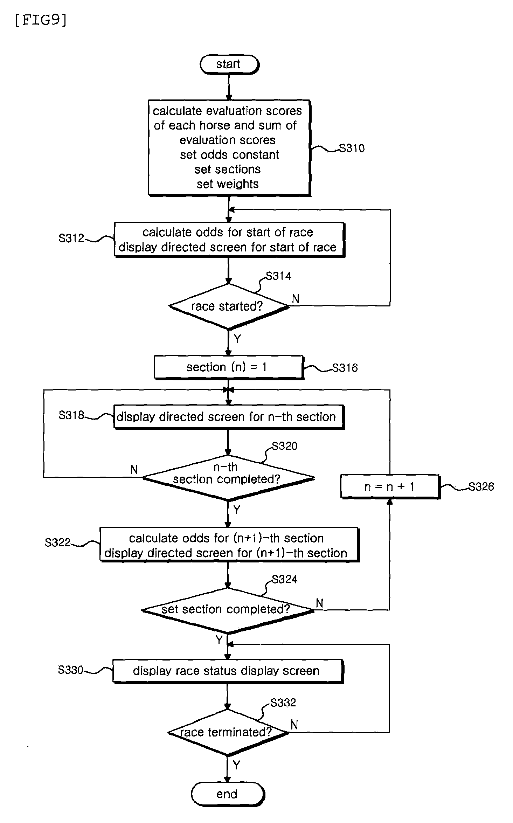

FIG. 9 is a flowchart illustrating a method of making bets after the start of a race according to the present invention. When the start of a race is detected through the insertion of one or more coins via the coin detection unit 160, the control unit 110 receives data about the capabilities of respective horses from the horse DB 132, calculates the evaluation score of each horse $H_i$ and the sum of the evaluation scores of respective horses $\Sigma H_{total}$, outputs them to the first winning percentage calculation unit 122, receives an odds constant A for determining odds, and sets the total number of sections available for betting and weight Ad at step S310.

The total number of sections is determined by dividing about the first 50% of the complete distance or period of a race into sections of 50 m or 100 m. Alternatively, the total number of sections may be determined by dividing about the first 50% of the complete period of a race into periods ranging from five minutes to ten minutes.

At step S312, the first winning percentage calculation unit 122 receives the odds constant A, the evaluation scores $H_i$ of respective horses and the total score $\Sigma H_{totai}$ of the evaluation scores of the respective horses, calculates relative winning percentages $X_i$ before the start of a race, determines the odds $Y_i$, and displays the corresponding data on the display device 200.

In this case, the first winning percentage calculation unit 122 calculates the relative winning percentages $X_i$ of the respective horses using the evaluation scores $H_i$ of the respective horses and the total score $\Sigma H_{total}$ of the evaluation scores of the respective horses through Equation (1), and then calculates the odds $Y_i$ of the respective horses using the odds constant A and the relative winning percentages $X_i$ through Equation (2).

In this case, the display device 200 displays a screen showing information about the respective horses before the start of the race, such as that shown in FIG. 2, and displays a directed screen before the start of a race showing odds and conversion ratios, such as those shown in FIG. 3, after a predetermined period of time.

Furthermore, the count display part 250 may provide notification of an impending race by counting down from about 10 seconds before the start of the race.

At step S314, the start of the race is determined. When the race starts, the section setting variable n is set to 1 at step S316. A directed screen corresponding to an n section is displayed on the display device 200 at step S318.

For an "n=1 section," that is, a first section after the start of a race, a directed screen identical to a directed screen before the start of the race is output. Here, odds and a conversion ratio are indicated the same as in the screen before the start of the race (see FIG. 3), and the status of the race is additionally indicated in the racecourse display part 210.

Whether a race has completed the "n=1" section is determined at step S320. If the section of the race is determined to have been completed, the relative winning percentages $X_{in}$ and odds $Y_{in}$ for the "n+1" section are calculated and then a directed screen for the "n+1" section into which odds are incorporated is displayed on the display device 200 at step S322.

In particular, when a race for an n-th section has been completed, the control unit 110 performs control so that the second winning percentage calculation unit 124 calculates odds to be used for an "n+1"-th section.

The data collection unit 150 collects running records $R_i$ for respective sections or periods and respective horses, and outputs them to the racing unit 140. The racing unit 140 calculates the average section records $R_{mn}$ of corresponding horses while referring to the running records $R_i$ for respective sections or periods and respective horses collected by the data collection unit 150, and outputs them to the second winning percentage calculation unit 124. The second winning percentage calculation unit 124 receives the average section records $R_{mn}$ and the running records $R_i$ for respective sections, calculates relative winning percentages $X_{in}$ using Equation 4, and calculates odds $Y_{in}$ using Equation 5.

Thereafter, whether a race for set sections has been completed is determined at step S324. If the race has been completed, odds for a final section are maintained and a directed screen displaying the status of the progress of the race is displayed on the display device 200 at step S330. This is continued until the race is terminated at step S332.

If the race for sections set at step S310 is determined not to be terminated at step S324, the section variable n is increased by "1" at step S312 and a corresponding directed screen is displayed.

The step of increasing the section variable n by "1" is performed in order to set odds for a subsequent section.

The following description will be given using a specific example.

When the odds constant A and the weight Ad are set as shown in Table 1, the horse is set to horse No. 1, the evaluation score $H_1$ for horse No. 1 based on unique capability is set to "84," the total of evaluation scores for all horses $\Sigma H_{total}$ is set to "600" and the past average record $R_m$ is set to 5.8 sec, numerical values set before the start of a race are as shown in the following Table 4:

**EP 2 446 947 A1**

Table 4

| | Before start of race | First section | Second section | ⋯ | Last section (10) |
|---|---|---|---|---|---|
| Odds constant A | 60 | 60 | 60 | 60 | 60 |
| Weight Ad | - | - | 1 | 2 ⋯ | 9 |
| Evaluation score for horse No. 1 H1 | 84 | | | | |
| Total of evaluation scores ΣHtotal | 600 | | | | |
| Past average record Rm | 5.8 sec | | | | |

1) Before the start of a race

The first winning percentage calculation unit 122 calculates a relative winning percentage $X_1$ for horse No. 1 using Equation (1), as follows:

The relative winning percentage of horse No. 1 $X_1=(H_1/\Sigma H_{total})*100$ is $X_1=(84/600)*100=14\%$, and the odds of horse No. 1 $Y_i$ are $Y_1=1/(X_1/A)=1/(14/60)\fallingdotseq4.28$ using Equation 2.

Accordingly, since odds before the start of the race are 4.28 times for horse No. 1, 4.28 times is displayed in the odds display part 224 of the directed screen before the start of a race and "1" is displayed in the conversion ratio display part 226.

The conversion ratios before the start of the race are all set to "1."

Through this directed screen, the gamer sets the amount of money to be bet through the betting part 170 and waits for the race.

2) After the start of the race

Odds after the start of the race and up to the first section are set to the odds before the start of the race, and the second winning percentage calculation unit 124 calculates odds and a conversion ratio for the second section on the basis of the data calculated by the racing unit 140 after the race of the first section has been terminated.

Here, when a section average record for a previous race $R_m$ is 5.8 sec an a first section running record $R_1$ is 4.9 sec immediately after a race for the first section has been terminated, a section evaluation factor $R_{11}$ for horse No. 1 is calculated below.

The evaluation factor $R_{12}$ for horse No. 1 and the second section is calculated using Equation 3, as follows:

$$R_{12}=Ad*(R_m-R_{n-1}) \text{ is } R_{12}=1*(5.8-4.9)=0.9.$$

Accordingly, since a relative winning percentage $X_{12}$ for horse No. 1 and the second section is calculated as $X_{12}=X_1/R_{12}=14/0.9\fallingdotseq15.56$ using Equation 4, odds $Y_{12}$ are calculated as $Y_{12}=1/(X_{12}/A)=1/(15.56/60)\fallingdotseq3.86$ times using Equation 5.

Accordingly, the conversion ratio B12 is calculated using Equation 6, as follows:

$$B_{12} = \text{odds before race } Y_i*1/Y_{12}$$
$$= 4.28*1/3.86$$
$$\fallingdotseq 1.11$$

Since this conversion ratio $B_{12}$ means odds for horse No. 1 from the termination of a race for the first section to the termination of a race for the second section, the conversion ratio $B_{12}$ is displayed on the directed screen until the race for the second section is terminated, thereby promoting betting.

13

In the same manner, after the race for the second section has been terminated, odds for a third section are calculated. For example, if a running record for horse No. 1 and the second section is 4.5 sec, a section average record $R_m$ is calculated first to an evaluation factor $R_{13}$ for horse No. 1 and the third section.

$$R_m = (4.9+4.5)/2 = 4.7 \text{ sec.}$$

Here, when the race for the second section is terminated, running records for the first and second sections are calculated, so that a section average record $R_m$ is calculated using the running records for the first and second sections without considering the past average speed.

$$R_{13}=Ad*(R_m-R_2)$$
$$=2*(4.7-4.5)=0.4.$$

Accordingly, a relative winning percentage for the third section $X_{13}$ is $X_{13}=X_1/R_{13}=14/0.4 \fallingdotseq 35.00$, and odds $Y_{13}$ are $Y_{13}=1/(X_{13}/A)=1/(35.00/60)=1.71$ times, so that a conversion ratio $B_{13}$ is calculated using Equation (6), as follows:

$$B_{13} =(\text{odds before race } Y_i*1)/Y_{13}$$

$$=4.28*1/1.71$$
$$\fallingdotseq 2.50.$$

When running records for a current section and respective horses are obtained as described above, odds for each section and respective horses are determined, and then conversion ratios are calculated and displayed.
The odds for horse No. 1 before the start of the race, the odds for the first section, the odds for the second section, and the odds for the third section are shown in the following Table 5:

Table 5

|  | Before start of race | First section | Second section | Third section |
|---|---|---|---|---|
| Odds constant A | 60 | 60 | 60 | 60 |
| Weight Ad | - | - | 1 | 2 |
| Section average record | 5.8 sec | 5.8 sec | 4.7 |  |
| Section running record | - | 4.9sec | 4.5 |  |
| Section evaluation factor $R_{1n}$ | - | - | 0.9 | 0.8 |
| Section relative winning percentage $X_{1n}$ | - | - | 15.56 | 17.50 |
| Section odds $Y_{1n}$ | - | - | 3.86 | 1.71 |
| Odds to be displayed on screen | 4.28 | 4.28 | 4.28 | 4.28 |
| Conversion ratio $B_n$ | 1 | 1 | 1.11 | 2.50 |
| Total of evaluation scores for all horses $\Sigma H_{total}$ | 600 |  |  |  |
| Total of evaluation scores for horse No. 1 $H_1$ | 84 |  |  |  |
| Relative winding percentage for horse No. 1 $X_1$ | 14% | 14% | 14% | 14% |

(continued)

|  | Before start of race | First section | Second section | Third section |
|---|---|---|---|---|
| Odds for horse No. 1 $Y_1$ | 4.28 | 4.28 |  |  |

Referring to the above table, it can be seen that data for an (n-1)-th section is used to calculate odds and a conversion ratio for an n-th section.

Although the method of calculating odds for records for respective sections and varying conversion ratios has been described above, an embodiment of displaying odds varying with the section without using conversion ratios is very apparent, so that a description thereof is omitted here.

Furthermore, although in the present specification, the method of making betting during a race has been described as being configured to place bets while varying odds and conversion ratios based on running records for respective sections or periods, it is apparent that odds and conversion ratios for the remaining distance or period can be indicated and used for respective sections or periods.

For example, relative winning percentages and odds before the start of a race are calculated in the same manner as in the above-described embodiment, and then betting before the start of the race is allowed.

When the race starts, average section records $R_{mn}$ for respective sections are calculated in the same manner and the remaining distance is set to "X." A predicted record $V_i$ for each horse and the remaining distance and the sum of respective predicted records $\Sigma V_i$ are calculated, and a section evaluation factor $R'_{in}$ is calculated using the following Equation (7):

$$R'_{in} = Ad' * V_i / \sum V_i \qquad (7)$$

where $R'_{in}$ is an evaluation factor for an i-th horse and an n-th section or period, and Ad' is a weight for each section or period.

The weight Ad' is set to a low value immediately before the start of a race, and to a high value after the start of the race, in conjunction with the total distance or period of a race.

Furthermore, the weight Ad' which is less than the number of a corresponding section by "1" is assigned in such a way that "0" is assigned to a first section, "1" is assigned to a second section and "2" is assigned to a third section.

Accordingly, the section evaluation factor for the i-th horse $R'_{in}$ is in inverse proportion to a score for each section.

When a record for a first section is obtained after the start of the race, a relative winning percentage for the i-th horse and the n-th section $X'_{in}$ is obtained by multiplying the relative winning percentage of the i-th horse before the start of the race $X'_i$ by the reciprocal of the section evaluation factor of the i-th horse $R'_{in}$ expressed by Equation (7), as shown in Equation (8):

$$X'_{in} = X'_i / R'_{in} \qquad (8)$$

where $X'_i$ is the relative winning percentage of the i-th horse before the start of the race.

Accordingly, when a relative winning percentage for each section is determined, odds for the i-th horse and the n-th section $Y'_{in}$ can be calculated using the following Equation (9) ;

$$Y'_{in} = 1 / (X'_{in} / A) \qquad (9)$$

Accordingly, a conversion ratio for the i-th horse and the n-th section $B'_{in}$ can also be calculated using the following Equation (10):

$$B'_{in} = \{\text{odds before race } Y_i * \text{conversion ratio before race}$$
$$1\} / \text{odds during race } Y'_{in}$$
$$= \text{constant } C \qquad (10)$$

This method is configured to make prediction for the remaining section(s) based on results for one or more previous sections, indicate odds and conversion ratios for the remaining section(s) and allow betting to be made.

By using the above-described method, odds before the start of a race for each horse and odds for each section and each horse can be determined, with the result that a gamer can place a bet during a race while referring to odds varying per section.

Although in the present specification, a win betting-type horse race has been chiefly described above, it will be apparent that odds or conversion ratios can be indicated for quinella betting or show betting in the same manner.

For example, when horse Nos. 1 and 2 are selected using quinella betting as shown in the right diagram of FIG. 6, relative winning percentages for horses Nos. 1 and 2 are respectively calculated as described above, a relative winning percentage for the quinella betting and horses Nos. 1 and 2 is obtained by multiplying the calculated relative winning percentages, and then odds and conversion ratios are calculated and indicated in the same manner.

Accordingly, according to the present invention, betting can be made both before and after the start of a race, so that gamers can enjoy a more suspenseful race and bookmakers can increase profits thanks to a larger number of bets.

Since gamers can make bets based on conversion ratios for one or more specific sections or periods, they can easily learn the flow of the race.

Furthermore, since gamers can view an expanded race course for a specific distance or period after the start of the race, they can be more interested in the race and enjoy it more.

Moreover, since a jackpot game is provided as a bonus game, a gamer can enjoy a variety of games based on a single game.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. A method of enabling betting during a race, comprising the steps of:

   (a) before start of a race, allowing bets to be made based on indicated odds; and
   (b) after start of the race, varying the odds depending on racing results for one or more predetermined sections and then allowing bets to be made based on the varied odds.

2. A method of enabling betting during a race, comprising the steps of:

   (a) before start of a race, allowing bets to be made based on set odds; and
   (b) after start of the race, varying a conversion ratio depending on racing results for one or more predetermined sections while keeping the set odds of step (a) constant and then allowing bets to be made based on the varied conversion ratio.

3. The method as set forth in claim 2, wherein before start of the race, the conversion ratio is set to "1".

4. The method as set forth in claim 2, wherein the conversion ratio is calculated using the following equation:

$$\text{Conversion ratio during race } B_{in} = \text{odds before start of race } Y_i / \text{odds during race } Y_{in}$$

   where $B_{in}$ is a conversion ratio for an i-th entity and an n-th section, $Y_i$ is odds before start of the race for the i-th entity, and $Y_{in}$ is odds for the i-th entity and the n-th section.

5. A method of enabling betting during a race, comprising the steps of:

   (a) before start of a race, allowing bets to be made based on set odds; and
   (b) after start of the race, varying the odds depending on winning possibility for a remaining distance and then allowing bets to be made based on the varied odds.

**6.** A method of enabling betting during a race, comprising the steps of:

(a) before start of a race, allowing bets to be made based on set odds; and
(b) after start of the race, varying a conversion ratio depending on winning possibility for a remaining distance while keeping the set odds of step (a) constant and then allowing bets to be made based on the varied conversion ratio.

**7.** The method as set forth in claim 6, wherein before the start of the race, the conversion ratio is set to "1."

**8.** The method as set forth in claim 5, wherein the step (b) comprises the steps of:

(b-1) calculating a running record $R_i$ for each entity and each section;
(b-2) calculating an average section record $R_{mn}$ for each entity and each section;
(b-3) calculating predicted records for each entity and a remaining distance and a sum of the predicted records using the average section record $R_{mn}$ and the running record for each section $R_i$ and calculating a section evaluation factor $R'_{in}$ using them;
(b-4) calculating a remaining section relative winning percentage for each entity $X'_{in}$ using the section evaluation factor for each entity $R'_{in}$; and
(b-5) calculating a remaining section odds for each entity $Y'_{in}$ using the remaining section relative winning percentage $X'_{in}$.

**9.** The method as set forth in claim 6, wherein the step (b) comprises the steps of:

(b-1) calculating a running record $R_i$ for each entity and each section;
(b-2) calculating an average section record $R_{nm}$ for each entity and each section;
(b-3) calculating predicted records for each entity and a remaining distance and a sum of the predicted records using the average section record $R_{mn}$ and the running record for each section $R_i$ and calculating a section evaluation factor $R'_{in}$ using them;
(b-4) calculating a remaining section relative winning percentage for each entity $X'_{in}$ using the section evaluation factor for each entity $R'_{in}$;
(b-5) calculating a remaining section odds for each entity $Y'_{in}$ using the remaining section relative winning percentage $X'_{in}$; and
(b-6) calculating a remaining section conversion ratio using the odds $Y'_{in}$.

**10.** The method as set forth in claim 9, wherein the remaining section conversion ratio is calculated using the following equation:

$$\text{Remaining section conversion ratio during race } B'_{in} = \text{odds}$$

$$\text{before start of race } Y_i / \text{remaining section odds during race } Y'_{in}$$

where $B'_{in}$ is a remaining section conversion ratio for an i-th entity and an n-th section, $Y_i$ is odds before start of the race for the i-th entity, and $Y'_{in}$ is remaining section odds for the i-th entity and the n-th section.

**11.** A system for enabling betting during a race, comprising:

a first winning percentage calculation unit for, before start of a race, calculating a relative winning percentage $X_i$ and odds $Y_i$ for each entity using an evaluation score for each entity participating in the race and a sum of evaluation scores for respective entities and outputting them;
a second winning percentage calculation unit for calculating a section evaluation factor for each section $R_{in}$ using a running record for each entity and each section Ri and an average section record for each section $R_{mn}$, and calculating and outputting a section relative winning percentage for each entity $X_{in}$ and odds for each entity $Y_{in}$;
a display device comprising information about respective entities, a betting screen before start of the race, a betting screen for each section after start of the race, and a racecourse display part for status of the race; and
a control unit for performing control so that before start of the race, the odds output from the first winning percentage calculation unit are displayed on the display device and, after start of the race, the odds output from the second winning percentage calculation unit are displayed on the betting screen for each section of the display device.

12. The system as set forth in claim 11, wherein the control unit performs control so that a conversion ratio is indicated as "1" on the betting screen before start of the race and the odds are regularly indicated and the conversion ratio is varied and then indicated on the betting screen for each section after start of the race.

13. The system as set forth in claim 12, wherein the conversion ratio is calculated using the following equation:

$$\text{Conversion ratio during race } B_{in} = \text{odds before start of}$$
$$\text{race } Y_i / \text{odds during race } Y_{in}$$

where $B_{in}$ is a conversion ratio for an i-th entity and an n-th section, $Y_i$ is odds before start of the race for the i-th entity, and $Y_{in}$ is odds for the i-th entity and the n-th section.

14. The system as set forth in claim 13, wherein the racecourse display part of the display device is configured to display, before start of the race, an entire distance of the race and status of preparation of respective entities at a start line, after start of the race and before termination of additional betting, an enlarged section for each predetermined distance and detailed status of the race, and, after termination of additional betting, an entire run distance.

15. The system as set forth in claim 14, wherein the display device comprises a racecourse display part provided in an upper portion of the display unit, configured in a lateral bar form, and configured to display the status of the race, a win betting display part and a quinella betting display part provided on one side of a portion below the upper portion, provided for respective entities participating in the race, and displayed in a vertical direction, and a jackpot display part provided on a remaining side of the portion below the upper portion.

16. The system as set forth in claim 15, wherein the jackpot display part is configured such that when a bet of a predetermined or larger amount is placed, additional betting is terminated, a bonus game is indicated, and then a payout corresponding to odds is paid when the order of horse numbers is hit.

17. A system for enabling betting during a race, comprising:

a first winning percentage calculation unit for, before start of a race, calculating a relative winning percentage $X_i$ and odds $Y_i$ for each entity using an evaluation score for each entity participating in the race and a sum of evaluation scores for respective entities and outputting them;
a second winning percentage calculation unit for calculating a remaining section evaluation factor for each section $R_{in}$ using a running record for each entity and each section $R_i$ and an average section record for each section $R_{mn}$, and calculating and outputting a remaining section relative winning percentage for each entity $X_{in}$ and remaining section odds for each entity $Y_{in}$:
a display device comprising information about respective entities, a betting screen before start of the race, a betting screen for each section after start of the race, and a racecourse display part for status of the race; and
a control unit for performing control so that before start of the race, the odds output from the first winning percentage calculation unit are displayed on the display device and, after start of the race, the remaining section odds output from the second winning percentage calculation unit are displayed on the betting screen for each remaining section of the display device.

18. The system as set forth in claim 17, wherein the control unit performs control so that a conversion ratio is indicated as "1" on the betting screen before start of the race and the odds are regularly indicated and the conversion ratio is varied and then indicated on the betting screen for each remaining section after start of the race.

19. A storage medium storing computer program sources for executing a method of enabling betting during a race, wherein the method comprises the steps of:

(a) before start of a race, allowing bets to be made based on set odds; and
(b) after start of the race, varying a conversion ratio depending on winning possibility for a remaining distance while keeping the set odds of step (a) constant and then allowing bets to be made based on the varied conversion ratio.

20. The storage medium as set forth in claim 19, wherein the step (b) comprises the steps of:

(b-1) calculating a running record $R_i$ for each entity and each section;

(b-2) calculating an average section record $R_{mn}$ for each entity and each section;

(b-3) calculating predicted records for each entity and a remaining distance and a sum of the predicted records using the average section record $R_{mn}$ and the running record for each section $R_i$ and calculating a section evaluation factor $R'_{in}$ using them;

(b-4) calculating a remaining section relative winning percentage for each entity $X'_{in}$ using the section evaluation factor for each entity $R'_{in}$;

(b-5) calculating a remaining section odds for each entity $Y'_{in}$ using the remaining section relative winning percentage $X'_{in}$; and

(b-6) calculating a remaining section conversion ratio using the odds $Y'_{in}$.

[FIG1]

[FIG2]

| NO | NAME | Age | Style | Last 5 races | Impost | Highest REC | Average REC | First Time | Last Time | Harmony |
|---|---|---|---|---|---|---|---|---|---|---|
| 1 | Continentz | 6 ↑ | ▷▷▷▷ NA | 2- | - | 0:59:47 | 1:04:03 | 0:24:79 | 0:24:00 | 46% |
| 2 | Mar De Kara | 4 ♀ | ▷▷▷▷ E | - | - | 0:59:94 | 1:02:49 | 0:24:58 | 0:23:20 | 68% |
| 3 | Systematic | 7 ↑ | ▷▷▷▷ NA | 5 | 4 | 0:02:69 | 1:04:46 | 0:26:38 | 0:24:96 | 87% |
| 4 | Comply or death | 3 ↑ | ▷▷▷▷ EP | 5 | | 0:59:47 | 1:03:06 | 0:24:71 | 0:23:31 | 51% |
| 5 | Hapcheon | 3 ↑ | ▷▷▷▷ EP | 2- -7 52 kg | | 1:00:00 | 1:03:01 | 0:25:56 | 0:22:51 | 67% |
| 6 | Belle Virtuoso | 7 ♀ | ▷▷▷▷ E | 2-8-5-1-5 | 47 kg | 1:00:14 | 1:01:29 | 0:24:67 | 0:24:09 | 55% |
| 7 | Vacamonte | 3 ↑ | ▷▷▷▷ E | 3-2-6-2-2 | 51 kg | 0:59:09 | 1:01:34 | 0:24:67 | 0:25:46 | 57% |
| 8 | Lolita | 4 ♀ | ▷▷▷▷ E | 6-3-2-8-2 | 50 kg | 1:02:56 | 1:01:41 | 0:24:31 | 0:26:05 | 90% |

a   b   c   d   e   f   g   h   i   j   k

NEXT ▶

| CREDIT // | 0.00 | WAGER // | 0.00 | WIN // | 0.00 | | PAYOUT |

[FIG3]

[FIG4]

[FIG5]

[FIG6]

[FIG7]

[FIG8]

[FIG9]

## INTERNATIONAL SEARCH REPORT

International application No.

**PCT/KR2009/004637**

| A. | CLASSIFICATION OF SUBJECT MATTER |
|---|---|

*A63F 13/10(2006.01)i*

According to International Patent Classification (IPC) or to both national classification and IPC

| B. | FIELDS SEARCHED |
|---|---|

Minimum documentation searched (classification system followed by classification symbols)
IPC8 A63F 13/10

Documentation searched other than minimum documentation to the extent that such documents are included in the fields searched
Korean Utility models and applications for Utility models(since 1975)
Japanese Utility models and applications for Utility models(since 1975)

Electronic data base consulted during the international search (name of data base and, where practicable, search terms used)
eKOMPASS (KIPO internal) & Keywords: race, betting, in a race

| C. | DOCUMENTS CONSIDERED TO BE RELEVANT | |
|---|---|---|
| Category* | Citation of document, with indication, where appropriate, of the relevant passages | Relevant to claim No. |
| X | KR 10-2002-0087623 A (ZETAWAVE CO., LTD.) 23 November 2002<br>See abstract, page 3 - page 5, figures 1 - 5b | 1-20 |
| A | KR 20-0260760 Y1 (UNIVERSAL ENTERTAINMENT CO.) 17 January 2002<br>See the entire description | 1-20 |
| A | KR 10-2005-0074226 A (AID CORP.) 18 July 2005<br>See the entire description | 1-20 |
| A | US 2002/0165017 A1 (NAGAO et al.) 07 November 2002<br>See the entire description | 1-20 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 JULY 2010 (20.07.2010) | **21 JULY 2010 (21.07.2010)** |

| Name and mailing address of the ISA/<br>Korean Intellectual Property Office<br>Government Complex-Daejeon, 139 Seonsa-ro, Daejeon 302-701,<br>Republic of Korea<br>Facsimile No. 82-42-472-7140 | Authorized officer<br><br>Telephone No. |
|---|---|

Form PCT/ISA/210 (second sheet) (July 2009)

28

INTERNATIONAL SEARCH REPORT
Information on patent family members

International application No.

**PCT/KR2009/004637**

| Patent document cited in search report | Publication date | Patent family member(s) | Publication date |
|---|---|---|---|
| KR 10-2002-0087623 A | 23.11.2002 | | |
| KR 20-0260760 Y1 | 17.01.2002 | JP 03-074926 U | 08.11.2000 |
| KR 10-2005-0074226 A | 18.07.2005 | KR 10-0552488 B1 | 20.02.2006 |
| US 2002-0165017 A1 | 07.11.2002 | AU 1997-37080 B2 | 31.08.2000 |
| | | EP 0864341 B1 | 15.10.2003 |
| | | EP 0864341 A1 | 16.09.1998 |
| | | EP 0864341 A4 | 27.10.1999 |
| | | JP 03870493 B2 | 17.01.2007 |
| | | JP 03870960 B2 | 24.01.2007 |
| | | JP 03931892 B2 | 20.06.2007 |
| | | JP 2004-358265 A | 24.12.2004 |
| | | JP 2004-313802 A | 11.11.2004 |
| | | JP 10-094675 A | 14.04.1998 |
| | | KR 10-0776224 B1 | 21.08.2008 |
| | | TW 386039 A | 01.04.2000 |
| | | TW 562687 A | 21.11.2003 |
| | | TW 565466 A | 11.12.2003 |
| | | US 07273414 B2 | 25.09.2007 |
| | | US 06394898 B1 | 28.05.2002 |
| | | WO 1998-005396 A1 | 12.02.1998 |

Form PCT/ISA/210 (patent family annex) (July 2009)

**REFERENCES CITED IN THE DESCRIPTION**

**Patent documents cited in the description**

- KR 200288709